# FASCICULE DE BREVET EUROPEEN

(11) **EP 4 036 455 B1**
(45) Date de publication et mention de la délivrance du brevet: **08.11.2023**
(21) Numéro de dépôt: 22151100.9
(22) Date de dépôt: 12.01.2022
(51) Int. Cl.: F17C 9/02

(54) **DISPOSITIF DE FOURNITURE DE FLUIDE À UN APPAREIL UTILISATEUR**
VORRICHTUNG ZUR ZUFÜHRUNG EINES FLUIDS ZU EINEM BENUTZERGERÄT
DEVICE FOR SUPPLYING FLUID TO A USER DEVICE

(30) Priorité: 01.02.2021 FR 2100941
(43) Date de publication de la demande: 03.08.2022
(73) Titulaire: L'Air Liquide, société anonyme pour l'Étude et l'Exploitation des procédés Georges Claude, 75007 Paris (FR)
(72) Inventeur: PENNEC, Yann, 38360 SASSENAGE (FR)
(74) Mandataire: Air Liquide

(56) Documents cités:
- CA-A1- 2 860 682
- FR-A1- 2 951 242
- FR-A1- 3 006 742
- FR-A1- 3 094 070
- US-A1- 2020 325 854

## Description

L'invention concerne un dispositif de fourniture de fluide à un appareil utilisateur.

Le document CA 2 860 682 A1 divulgue un tel dispositif.

L'invention concerne plus particulièrement un dispositif de fourniture de fluide à un appareil utilisateur, en particulier un carburant cryogénique tel que de l'hydrogène à un moteur, le dispositif comprenant un réservoir cryogénique de fluide liquéfié comprenant une phase liquide et une phase gazeuse, un appareil utilisateur, organe de réchauffage comprenant une première extrémité reliée au réservoir et une seconde extrémité reliée à l'appareil utilisateur, la conduite de soutirage comprenant un réchauffeur du fluide soutiré, le dispositif comprenant un système de mise en pression du réservoir comprenant une conduite de mise en pression comprenant une première extrémité reliée à une extrémité supérieure du réservoir, une second extrémité reliée à une extrémité inférieure du réservoir, la conduite de mise en pression comprenant un organe de pompage de fluide et un organe de réchauffage et étant configurée pour soutirer du fluide gazeux dans le réservoir, le réchauffer dans l'organe de réchauffage et pour réinjecter ce fluide réchauffé en partie basse dans la phase liquide.

L'invention concerne en particulier un ensemble comprenant un récipient de stockage cryogénique de carburant (hydrogène par exemple) et un moteur (pile à combustible par exemple) d'un véhicule.

Un tel dispositif est par exemple prévu pour faire fonctionner une pile à combustible d'un véhicule avec de l'hydrogène liquide et/ou gazeux.

L'intégration de tels dispositifs dans des véhicules nécessite une optimisation au vu des contraintes de sécurité, de coût et de masse (en particulier pour les véhicules volant).

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que la conduite de mise en pression et la conduite de soutirage possèdent une portion commune et en ce que l'organe et réchauffage et le réchauffeur sont constitués d'un même unique échangeur de chaleur.

Par ailleurs, des modes de réalisation de l'invention peuvent comporter l'une ou plusieurs des caractéristiques suivantes :
- le dispositif comporte une conduite de remplissage comprenant une première extrémité destinée à être reliée à une source de fluide et une seconde extrémité reliée au réservoir,
- la conduite de remplissage est distincte de la conduite de soutirage et de la conduite de mise en pression et comprend uniquement un clapet de type raccord rapide au niveau de sa première extrémité et est dépourvu d'une autre vanne d'isolation entre ses deux extrémités,
- le dispositif comporte une conduite de dégazage comprenant une extrémité reliée à l'extrémité supérieure du réservoir et une seconde extrémité reliée à une zone de décharge, la conduite de dégazage comprenant un ensemble de vanne(s) configuré pour commander l'évacuation d'une surpression vers l'extérieur du réservoir,
- la conduite de dégazage comprend une portion commune avec la conduite de soutirage.

L'invention peut concerner également tout dispositif alternatif comprenant toute combinaison des caractéristiques ci-dessus ou ci-dessous dans le cadre des revendications. D'autres particularités et avantages apparaîtront à la lecture de la description ci-après, faite en référence à la :

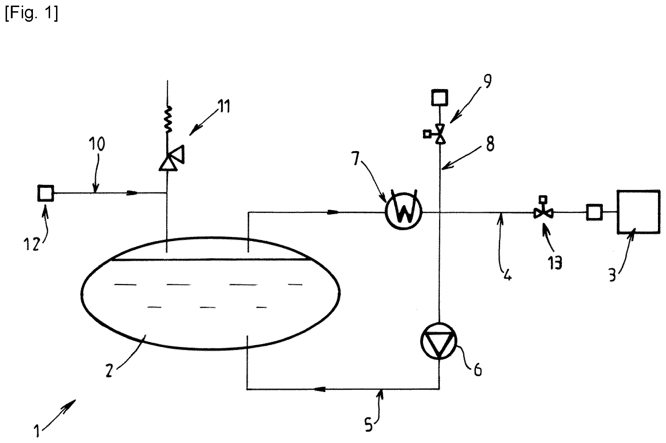

[Fig. 1] qui représente, une vue schématique et partielle, illustrant un exemple de structure et de fonctionnement d'un dispositif selon l'invention.

Le dispositif 1 de fourniture de fluide comprend un réservoir 2 cryogénique de fluide liquéfié (typiquement de l'hydrogène) comprenant une phase liquide (en partie inférieure) et une phase gazeuse (en partie supérieure). Le dispositif 1 comprend un appareil utilisateur 3 tel qu'une pile à combustible ou tout autre moteur.

Le réservoir 2 est de préférence un stockage cryogénique, par exemple à double parois et isolé sous vide.

Le dispositif 1 comprend un organe 7 de réchauffage comprenant une première extrémité reliée au réservoir 2 (de préférence en partie supérieure gazeuse mais qui peut fonctionner également en variante ou en combinaison avec un soutirage liquide) et une seconde extrémité reliée à l'appareil utilisateur 3 en vue de son approvisionnement en fluide carburant.

La conduite 4 de soutirage comprend un réchauffeur 7 du fluide soutiré, par exemple pour réchauffer le fluide d'une température cryogénique jusqu'à une température non cryogénique, par exemple comprise entre -100°C et +60°C. Comme représenté, la conduite 4 de soutirage possède de préférence une vanne 13 ou clapet.

Le dispositif 1 comprend en outre un système de mise en pression du réservoir 2 comprenant une conduite 5 de mise en pression. Cette conduite 5 de mise en pression comprend une première extrémité reliée à une extrémité supérieure du réservoir 2 (pour prélever du gaz) et une seconde extrémité reliée de préférence à une extrémité inférieure du réservoir 2. La conduite de mise en pression 5 comprend un organe 6 de circulation de fluide (ventilateur, pompe, compresseur ou tout autre organe approprié) et un organe 7 de réchauffage. Ceci permet de soutirer du fluide gazeux dans le réservoir, le réchauffer dans l'organe 7 de réchauffage pour le réinjecter en partie basse dans la phase liquide pour augmenter la pression dans le réservoir à une valeur déterminée (par exemple pour permettre un soutirage par simple différentiel de pression).

Selon une particularité avantageuse, la conduite 5 de mise en pression et la conduite 4 de soutirage possèdent une portion commune et en l'organe et réchauffage et le réchauffeur sont constitués d'un même unique échangeur 7 de chaleur.

Ainsi, le soutirage pour alimenter un moteur ou pour pressuriser le réservoir 2 peut utiliser un seul tuyau relié au sommet du réservoir 2. Ainsi, dans la plupart des opérations courantes, seul le gaz peut être extrait. Ceci permet une parfaite conformité à toutes les conditions de mobilité arbitraires (inclinaison, vibrations, turbulences, etc.) du véhicule qui comprend ce dispositif 1.

Un seul échangeur 7 (unique par exemple) peut être prévu pour ces deux fonctions : pour réchauffer le gaz à température ambiante ou pour pressuriser le réservoir 2.

De préférence, cette unité est externe au réservoir 2 et reliée par une ligne isolée à double paroi. L'échangeur de chaleur peut être logé dans une chambre à vide dédiée dont le rôle principal est d'assurer la sécurité en cas de panne/fuite de l'unité.

Cette architecture, plus simple que les systèmes connus à deux systèmes distincts permet tout de même la gestion de la pression. En effet, la puissance de réchauffage requise qui peut être extrêmement importante (de 10 kW à 100 kW selon la taille du réservoir) est possible (en particulier lorsque tout le carburant doit être réchauffé jusqu'à la température de saturation de la pression de service).

Contrairement aux systèmes binaires préconisés dans l'art antérieur, la présente solution permet de répondre aux contraintes.

La pressurisation du réservoir 2 peut être réalisée par injection directe de gaz chaud dans le réservoir 2. Une petite quantité de gaz chaud peut transporter une grande quantité de chaleur à environ 4 kJ/g. La chaleur peut se diffuser efficacement dans le liquide grâce aux injecteurs à bulles diffuses. La puissance peut facilement être réglée en faisant varier le débit massique (par exemple via l'organe 6). Cet organe 6 peut être une petite unité d'alimentation compacte car il n'a pas besoin d'une pression de tête importante, généralement de 100 mBar.

Le dispositif 1 utilise le même échangeur 7 de chaleur pour la mise en pression que et la conduite de carburant. Ces deux fonctions peuvent être utilisées à tour de rôle sans affecter négativement la dynamique d'injection de carburant vers le moteur 3.

Le dispositif comporte en outre une conduite 8 de dégazage comprenant une extrémité reliée à l'extrémité supérieure du réservoir 2 et une seconde extrémité reliée à une zone de décharge, la conduite 8 de dégazage comprenant un ensemble de vanne(s) 9 configuré pour évacuer une surpression vers l'extérieur du réservoir 2. Cette conduite 8 de dégazage comprend de préférence une portion commune avec la conduite 4 de soutirage (liaison au réservoir 2 par exemple).

Le dispositif 1 comprend une conduite 10 de remplissage de préférence distincte qui possède une première extrémité destinée à être reliée à une source de fluide et une seconde extrémité reliée au réservoir 2 (par exemple en partie supérieure).

Celle-ci comprend de préférence uniquement un clapet 12 de type raccord rapide au niveau de sa première extrémité et est ainsi dépourvu d'une autre vanne d'isolation entre ses deux extrémités. Ceci procure une simplification tout à fait avantageuse du dispositif 1 en abaissant le coût de fabrication, en améliorant l'indice de gravité, en augmentant la fiabilité.

La conduite 10 de remplissage peut comporter par exemple uniquement un seul composant de fermeture, par exemple un raccord de type « Johnston » associé à une vanne d'arrêt cryogénique.

Bien entendu, ceci pourrait être remplacé par un seul raccord rapide auto-obturant.

Cette simplification permet le remplissage au cours duquel le transfert de fluide sous-refroidi ne génère pas ou peu de gaz. Et même si du gaz de vaporisation était généré lors d'un remplissage, des séquences alternées de remplissage/dépressurisation peuvent être envisagées à l'intérieur du port unique. Cette dépressurisation peut être réalisée via la conduite 8 de dégazage et une vanne 9 ou soupape de préférence non isolée cryogéniquement (en aval de l'échangeur de chaleur 7). Ceci permet une extraction simple de l'excès de pression ou de carburant.

Ceci permet de s'affranchir de boîtes de vannes préconisées dans les solutions connues.

Ainsi, seules deux vannes cryogéniques (au une seule ou aucune) peuvent être nécessaires pour le remplissage qui peuvent être intégrées directement sur la structure extérieure du réservoir 2.

Le réservoir 2 est protégé de la surpression par une soupape 11 de surpression supplémentaire sur la ligne de remplissage (et qui peut être doublée si besoin).

Toutes les tuyauteries du dispositif 1 peuvent être directement connectées à une unité de sécurité (sans soupapes éventuellement défaillantes).

L'échangeur 7 de chaleur peut être logé dans une unité de vide dédiée afin de ne pas contaminer le vide du réservoir 2 principal en cas de défaillance.

Le transfert vers la pile à combustible 3 peut être arrêté soit par une vanne d'ambiance située après l'échangeur7 de chaleur à combustible, soit par dépressurisation du réservoir 2.

L'échangeur 7 de chaleur d'alimentation en carburant peut être distant, connecté à une ligne à double paroi de longueur arbitraire.

L'organe 6 de pompage peut être connecté à distance avec une ligne à double paroi de longueur arbitraire. L'unité de sécurité peut être connectée à distance avec des lignes à double paroi de longueur de préférence inférieure à deux mètres afin de limiter le surdimensionnement des lignes. Chaque sous-système peut être fabriqué séparément en limitant les besoins d'intégration complexe et en offrant un grand degré de liberté pour s'adapter aux contraintes.

## Revendications

1. Dispositif de fourniture de fluide à un appareil utilisateur, en particulier un carburant cryogénique tel que de l'hydrogène à un moteur (3), le dispositif (1) comprenant un réservoir (2) cryogénique de fluide liquéfié comprenant une phase liquide et une phase gazeuse, un appareil utilisateur (3), un organe (7) de réchauffage comprenant une première extrémité reliée au réservoir (2) et une seconde extrémité reliée à l'appareil utilisateur (3), une conduite (4) de soutirage comprenant un réchauffeur (7) du fluide soutiré, le dispositif (1) comprenant un système de mise en pression du réservoir (2) comprenant une conduite (5) de mise en pression comprenant une première extrémité reliée à une extrémité supérieure du réservoir (2), une second extrémité reliée à une extrémité inférieure du réservoir (2), la conduite de mise en pression comprenant un organe (6) de pompage de fluide et un organe (7) de réchauffage et étant configurée pour soutirer du fluide gazeux dans le réservoir, le réchauffer dans l'organe (7) de réchauffage et pour réinjecter ce fluide réchauffé en partie basse dans la phase liquide, **caractérisé en ce que** la conduite (5) de mise en pression et la conduite (4) de soutirage possèdent une portion commune et **en ce que** l'organe de réchauffage et le réchauffeur sont constitués d'un même unique échangeur (7) de chaleur.

2. Dispositif selon la revendication 1, **caractérisé en ce qu'**il comporte une conduite (10) de remplissage comprenant une première extrémité destinée à être reliée à une source de fluide et une seconde extrémité reliée au réservoir (2).

3. Dispositif selon la revendication 1 ou 2, **caractérisé en ce que** la conduite (10) de remplissage est distincte de la conduite (4) de soutirage et de la conduite (5) de mise en pression et comprend uniquement un clapet de type raccord rapide au niveau de sa première extrémité et est dépourvu d'une autre vanne d'isolation entre ses deux extrémités.

4. Dispositif selon l'une quelconque des revendications 1 à 3, **caractérisé en ce qu'**il comporte une conduite (8) de dégazage comprenant une extrémité reliée à l'extrémité supérieure du réservoir (2) et une seconde extrémité reliée à une zone de décharge, la conduite (8) de dégazage comprenant un ensemble de vanne(s) (9) configuré pour commander l'évacuation d'une surpression vers l'extérieur du réservoir (2).

5. Dispositif selon la revendication 4, **caractérisé en ce que** la conduite (8) de dégazage comprend une portion commune avec la conduite (4) de soutirage.

## Patentansprüche

1. Vorrichtung zum Zuführen eines Fluids zu einem Benutzergerät, insbesondere eines kryogenen Treibstoffs wie Wasserstoff zu einem Motor (3), wobei die Vorrichtung (1) einen Kryogenbehälter (2) für verflüssigtes Fluid mit einer flüssigen Phase und einer gasförmigen Phase, ein Benutzergerät (3), ein Heizorgan (7) mit einem ersten Ende, das mit dem Behälter (2) verbunden ist, und einem zweiten Ende, das mit dem Benutzergerät (3) verbunden ist, und eine Entnahmeleitung (4) mit einem Erhitzer (7) für das entnommene Fluid umfasst, wobei die Vorrichtung (1) ein System zur Druckbeaufschlagung des Behälters (2) umfasst, das eine Druckbeaufschlagungsleitung (5) mit einem ersten Ende, das mit einem oberen Ende des Behälters (2) verbunden ist, und einem zweiten Ende, das mit einem unteren Ende des Behälters (2) verbunden ist, umfasst, wobei die Druckbeaufschlagungsleitung ein Fluidpumporgan (6) und ein Heizorgan (7) umfasst und dazu konfiguriert ist, gasförmiges Fluid aus dem Behälter zu entnehmen, es im Heizorgan (7) zu erhitzen und dieses erwärmte Fluid im unteren Teil wieder in die flüssige Phase einzuspritzen, **dadurch gekennzeichnet, dass** die Druckbeaufschlagungsleitung (5) und die Entnahmeleitung (4) einen gemeinsamen Abschnitt besitzen und dass das Heizorgan und der Erhitzer aus demselben einzigen Wärmetauscher (7) gebildet sind.

2. Vorrichtung nach Anspruch 1, **dadurch gekennzeichnet, dass** sie eine Füllleitung (10) mit einem ersten Ende, das dazu bestimmt ist, mit einer Fluidquelle verbunden zu sein, und einem zweiten Ende, das mit dem Behälter (2) verbunden ist, aufweist.

3. Vorrichtung nach Anspruch 1 oder 2, **dadurch gekennzeichnet, dass** die Füllleitung (10) von der Entnahmeleitung (4) und der Druckbeaufschlagungsleitung (5) getrennt ist und nur ein Ventil vom Typ Schnellanschluss an ihrem ersten Ende umfasst und zwischen ihren beiden Enden kein weiteres Absperrventil aufweist.

4. Vorrichtung nach einem der Ansprüche 1 bis 3, **dadurch gekennzeichnet, dass** sie eine Entgasungsleitung (8) mit einem Ende, das mit dem oberen Ende des Behälters (2) verbunden ist, und einem zweiten Ende, das mit einem Auslassbereich verbunden ist, aufweist, wobei die Entgasungsleitung (8) eine Ventilanordnung (9) umfasst, die dazu ausgelegt ist, die Ableitung eines Überdrucks aus dem Behälter (2) nach außen zu steuern.

5. Vorrichtung nach Anspruch 4, **dadurch gekennzeichnet, dass** die Entgasungsleitung (8) einen gemeinsamen Abschnitt mit der Entnahmeleitung (4) umfasst.

## Claims

1. Device for supplying fluid to a user apparatus, in particular a cryogenic fuel such as hydrogen to an engine (3), the device (1) comprising a liquefied fluid cryogenic tank (2) comprising a liquid phase and a gaseous phase, a user apparatus (3), a heating unit (7) comprising a first end which is connected to the tank (2) and a second end which is connected to the user apparatus (3), a drawing-off duct (4) comprising a heater (7) for the fluid drawn off, the device (1) comprising a system for pressurising the tank (2) comprising a pressurising duct (5) comprising a first end which is connected to an upper end of the tank (2), a second end which is connected to a lower end of the tank (2), the pressurising duct comprising a fluid pumping unit (6) and a heating unit (7), and being configured to draw off gaseous fluid from the tank, to heat it in the heating unit (7), and to reinject this heated fluid into the low part in the liquid phase, **characterized in that** the pressurising duct (5) and the drawing-off duct (4) have a portion in common, and **in that** the heating unit and the heater are constituted by a single heat exchanger (7).

2. Device according to Claim 1, **characterized in that** it comprises a filling duct (10), comprising a first end which is designed to be connected to a source of fluid, and a second end which is connected to the tank (2).

3. Device according to Claim 1 or 2, **characterized in that** the filling duct (10) is distinct from the drawing-off duct (4) and from the pressurising duct (5), it comprises only one shutter of the rapid connection type at its first end, and is without another isolation valve between its two ends.

4. Device according to any one of Claims 1 to 3, **characterized in that** it comprises a degassing duct (8) comprising an end which is connected to the upper end of the tank (2), and a second end which is connected to a discharge area, the degassing duct (8) comprising a valve(s) assembly (9) which is configured to control the discharge of excess pressure to the exterior of the tank (2) .

5. Device according to Claim 4, **characterized in that** the degassing duct (8) comprises a portion in common with the drawing-off duct (4).
